# EUROPEAN PATENT APPLICATION

(11) **EP 4 848 445 A1**
(43) Date of publication of application: **02.12.2026**
(21) Application number: 24944147.8
(22) Date of filing: 20.08.2024
(51) Int. Cl.: H01M 50/342, H01M 50/103, H01M 50/209, H01M 50/249

(54) **BATTERY CELL, BATTERY AND ELECTRIC DEVICE**

(30) Priority: 27.06.2024 CN 202410851607
(71) Applicant: Contemporary Amperex Technology Co., Limited, Ningde, Fujian 352100 (CN)
(72) Inventor: CHEN, Xinxiang, Ningde, Fujian 352100 (CN); LI, Yuanlin, Ningde, Fujian 352100 (CN); LIN, Yuanyuan, Ningde, Fujian 352100 (CN); LIN, Denghua, Ningde, Fujian 352100 (CN); HUANG, Shoujun, Ningde, Fujian 352100 (CN); ZHENG, Yulian, Ningde, Fujian 352100 (CN)
(74) Representative: Ran, Handong
(86) International application number: PCT/CN2024/113430
(87) International publication number: WO 2026/000573

(57) **Abstract**

A battery cell (20), a battery (100) and an electric device, which belong to the technical field of batteries. The battery cell (20) comprises a casing (21) and an electrode assembly (22), wherein the casing (21) has a wall portion (211); the electrode assembly (22) is accommodated in the casing (21); and the casing (21) is made of steel, a pressure relief groove (2111) is provided in the wall portion (211), and the wall portion (211) is configured to be able to crack along at least part of the pressure relief groove (2111) when the battery cell (20) relieves pressure, so as to relieve the internal pressure of the battery cell (20). The battery cell (20) can enhance the structural strength of the casing (21) and the region of the wall portion (211) where the pressure relief groove (2111) is provided, and can alleviate the expansion and deformation of the casing (21) of the battery cell (20) during use, so as to reduce the strain and strain amplitude of the region of the wall portion (211) where the pressure relief groove (2111) is provided, thereby reducing the occurrence of the phenomenon of low-cycle fatigue in the region of the wall portion (211) where the pressure relief groove (2111) is provided, further helping to lower the risk of premature valve opening and pressure relief in the battery cell (20), prolonging the service life of the battery cell (20) and improving the operational reliability thereof.

## Description

### CROSS-REFERENCE TO RELATED APPLICATIONS

This application claims priority to Chinese Patent Application No. 2024108516074, filed on June 27, 2024 and entitled "BATTERY CELL, BATTERY, AND ELECTRIC APPARATUS", which is incorporated herein by reference in its entirety.

### TECHNICAL FIELD

This application relates to the field of battery technologies, and in particular, to a battery cell, a battery, and an electric apparatus.

### BACKGROUND

In recent years, new energy vehicles have experienced leapfrog development. In the field of electric vehicles, traction batteries, as a power source of electric vehicles, play an irreplaceable and important role. With the vigorous promotion of new energy vehicles, the demand for traction battery products is also growing day by day. Since batteries are core components of new energy vehicles, high requirements are imposed on the operational reliability and the service life.

In battery technologies, to ensure the safety of a battery cell, a housing of the battery cell is generally provided with a pressure relief structure for relieving the internal pressure of the battery cell, so that when the internal pressure or temperature of the battery cell reaches a threshold, the pressure relief structure can actuate to relieve the internal pressure of the battery cell. However, existing pressure relief structures of battery cells often experience premature actuation and valve opening during use, which leads to poor use stability of the battery cells and thus is not conducive to improving the service life and use reliability of the battery cells.

### SUMMARY

Embodiments of this application provide a battery cell, a battery, and an electric apparatus, which effectively improve the service life and use reliability of the battery cell.

According to a first aspect, an embodiment of this application provides a battery cell, including a housing and an electrode assembly. The housing has a wall portion. The electrode assembly is accommodated in the housing; where the housing is made of steel, the wall portion is provided with a pressure relief groove, and the wall portion is configured to be capable of cracking along at least a portion of the pressure relief groove when the battery cell relieves pressure, so as to relieve an internal pressure of the battery cell.

In the above technical solution, the housing of the battery cell is made of steel, and the wall portion of the housing is provided with the pressure relief groove, so that when the battery cell relieves pressure, the wall portion is capable of cracking along at least a portion of the pressure relief groove to relieve the internal pressure of the battery cell, thereby enabling a pressure relief structure of the battery cell to be a structure integrally formed with the housing. The use of such structure in the battery cell can enhance the structural strength of the housing and the structural strength of a region of the wall portion where the pressure relief groove is provided, reduce the risk of explosion of the battery cell during use, and alleviate the phenomenon of swelling deformation of the housing of the battery cell during use, which helps to reduce the strain and strain amplitude of the region of the wall portion where the pressure relief groove is provided and thus can reduce the occurrence of low-cycle fatigue in the region of the wall portion where the pressure relief groove is provided, so as to reduce fatigue damage in the region of the wall portion where the pressure relief groove is provided. This helps to reduce the risk of premature valve opening for pressure relief of the battery cell, thereby improving the service life and use reliability of the battery cell.

In some embodiments, a wall thickness of the wall portion is D₁, satisfying 0.075 mm≤D₁≤0.4 mm.

In the above technical solution, the wall thickness of the wall portion is set to be 0.075 mm to 0.4 mm. On the one hand, setting the wall thickness of the wall portion to be greater than or equal to 0.075 mm helps to enhance the structural strength of the wall portion, so as to reduce the risk such as damage or cracking of the wall portion and further alleviate the phenomenon of swelling deformation of the housing of the battery cell during use. On the other hand, setting the wall thickness of the wall portion to be less than or equal to 0.4 mm reduces the difficulty of processing and forming the pressure relief groove on the wall portion, making it easier to provide the pressure relief groove on the wall portion, thereby helping to reduce the processing difficulty of the battery cell.

In some embodiments, the wall thickness of the wall portion is D₁, satisfying 0.075 mm≤D₁≤0.25 mm.

In the above technical solution, the wall thickness of the wall portion is further set to be less than or equal to 0.25 mm to further reduce difficulty of processing and forming the pressure relief groove on the wall portion, making it easier to provide the pressure relief groove on the wall portion, thereby helping to further reduce the processing difficulty of the battery cell.

In some embodiments, along a thickness direction of the wall portion, a minimum residual thickness of the pressure relief groove is D₂, and the wall thickness of the wall portion is D₁, satisfying 0.08≤D₂/D₁≤0.3.

In the above technical solution, the ratio of the minimum residual thickness of the pressure relief groove to the wall thickness of the wall portion is set to be 0.08 to 0.3. On the one hand, setting the ratio of the minimum residual thickness of the pressure relief groove to the wall thickness of the wall portion to be greater than or equal to 0.08 alleviates the phenomenon of excessive processing of the pressure relief groove on the wall portion, so as to reduce the difficulty of providing the pressure relief groove on the wall portion and enhance the structural strength of the region of the wall portion where the pressure relief groove is provided. This helps to alleviate the phenomena such as accidental cracking or damage in the region of the wall portion where the pressure relief groove is provided, thereby improving the use stability of the battery cell. On the other hand, setting the ratio of the minimum residual thickness of the pressure relief groove to the wall thickness of the wall portion to be less than or equal to 0.3 alleviates the phenomenon of insufficient depth of the pressure relief groove processed on the wall portion, which reduces a bursting pressure required for the pressure relief of the battery cell and helps to improve the timeliness of the pressure relief of the battery cell. This reduces the risk such as explosion or bursting of the battery cell during use, thereby improving the use reliability of the battery cell.

In some embodiments, along the thickness direction of the wall portion, the wall portion has a first surface and a second surface opposite each other, the second surface faces the electrode assembly, the first surface is provided with a first groove, a first protrusion protruding from the second surface is formed at a position of the wall portion corresponding to the first groove, and the pressure relief groove is provided on the first protrusion.

In the above technical solution, the wall portion is a concave-convex structure with the first groove formed on one side and the first protrusion formed on the other side, and the pressure relief groove on the wall portion for pressure relief is provided on the first protrusion. The use of such structure in the battery cell, on the one hand, facilitates the processing and formation of the pressure relief groove on the wall portion, helps to improve a material flow form during the process of processing and forming the pressure relief groove on the wall portion, so as to improve the processing quality of the pressure relief groove and help to enhance the structural strength of the region of the wall portion where the pressure relief groove is provided, thereby alleviating the phenomena such as deformation of the region of the wall portion where the pressure relief groove is provided during use. On the other hand, the pressure relief groove can be provided on the first protrusion of the wall portion that protrudes toward the inside of the battery cell, which helps to improve the protection effect on the region of the wall portion where the pressure relief groove is provided. This can reduce the phenomena such as abrasion of the region of the wall portion where the pressure relief groove is provided during assembly or use, thereby improving the use stability of the battery cell.

In some embodiments, the first protrusion includes a first side wall and a first bottom wall, the first side wall is disposed around the first bottom wall, and the first side wall is connected to the first bottom wall. The first side wall and the first bottom wall jointly define the first groove, and the pressure relief groove is provided on the first bottom wall.

In the above technical solution, the first protrusion includes the first side wall and the first bottom wall, and the first side wall is disposed around the first bottom wall, so that the first side wall and the first bottom wall of the first protrusion jointly enclose and define the first groove. By providing the pressure relief groove on the first bottom wall of the first protrusion, the pressure relief groove is a structure provided on the bottom wall of the first groove. The use of such structure in the battery cell, on the one hand, facilitates the processing of the pressure relief groove on the first protrusion and helps to reduce the processing difficulty of the pressure relief groove. On the other hand, the first side wall can absorb and buffer part of stress transmitted from the wall portion to the first bottom wall, so as to reduce the stress influence on the region of the first protrusion where the pressure relief groove is provided, thereby helping to improve the use reliability and stability of the battery cell.

In some embodiments, the first bottom wall includes a main portion and an arch portion, the main portion connects the arch portion and the first side wall, and the main portion surrounds a peripheral side of the arch portion; where along the thickness direction of the wall portion, the arch portion arches from the main portion in a direction facing away from the electrode assembly, to form a second groove at a position corresponding to the arch portion on a side of the first bottom wall facing the electrode assembly, and the pressure relief groove is provided on the main portion.

In the above technical solution, a portion of the first bottom wall of the first protrusion is set as a structure arching in the direction facing away from the electrode assembly, so that the first bottom wall is provided with the arch portion and the main portion, where the main portion surrounds the peripheral side of the arch portion and connects the arch portion and the first side wall. The provision of the pressure relief groove on the main portion, on the one hand, can reduce the difficulty of processing and forming the pressure relief groove on the first bottom wall and help to improve a material flow form during the process of forming the pressure relief groove on the first bottom wall so as to improve the processing quality of the pressure relief groove, and on the other hand, can further enhance the structural strength of the first bottom wall, which helps to alleviate the phenomena such as deformation of the region of the wall portion where the pressure relief groove is provided during use, thereby improving the use reliability and stability of the battery cell.

In some embodiments, the pressure relief groove surrounds the arch portion.

In the above technical solution, the pressure relief groove is set as an annular structure surrounding the arch portion, so that the overall region of the first bottom wall where the arch portion is formed can fall off after the overall wall portion cracks along the pressure relief groove during pressure relief of the battery cell, which helps to expand a pressure relief area of the battery cell, and thus further increases a pressure relief rate of the battery cell, so as to reduce the risk such as explosion or bursting caused by untimely pressure relief of the battery cell, thereby effectively improving the use reliability of the battery cell.

In some embodiments, along the thickness direction of the wall portion, the pressure relief groove is provided on a side of the main portion facing away from the electrode assembly.

In the above technical solution, the pressure relief groove is provided on the side of the main portion of the first bottom wall facing away from the electrode assembly, so that the pressure relief groove is formed on a bottom surface of the first groove, which can reduce the difficulty of forming the pressure relief groove on the main portion of the first bottom wall and facilitate the formation of the pressure relief groove during formation of the first groove and the arch portion, thereby improving the processing efficiency of the battery cell.

In some embodiments, the pressure relief groove is formed on the main portion by stamping.

In the above technical solution, the pressure relief groove is set as a structure formed on the main portion of the first bottom wall by stamping. This, on the one hand, can reduce the manufacturing difficulty of the pressure relief groove and help to improve the processing efficiency of the pressure relief groove, and on the other hand, facilitates formation of a material flow during stamping formation of the pressure relief groove in the structure where the wall portion is provided with the first groove and the first protrusion and the first bottom wall of the first protrusion is provided with the arch portion, which helps to improve the processing consistency of the pressure relief groove, thereby improving the production quality of the battery cell.

In some embodiments, the battery cell further includes an insulating member; the insulating member is disposed on a side of the wall portion facing the electrode assembly; and the insulating member is configured to insulate and isolate the wall portion from the electrode assembly. Along the thickness direction of the wall portion, a side of the insulating member facing the wall portion is provided with an avoidance portion, and the avoidance portion accommodates the first protrusion.

In the above technical solution, by providing the avoidance portion for accommodating the first protrusion on the side of the insulating member facing the wall portion, the insulating member can avoid the first protrusion. This, on the one hand, can alleviate the interference phenomenon between the first protrusion and the insulating member or other components, so as to improve the assembly quality of the battery cell. On the other hand, the first protrusion of the wall portion provided with the pressure relief groove is accommodated in the avoidance portion of the insulating member, so that the insulating member can further provide certain protection for the region of the wall portion where the pressure relief groove is provided, so as to reduce the phenomenon of abrasion or damage in the region of the wall portion where the pressure relief groove is provided during assembly, thereby helping to improve the production quality of the battery cell.

In some embodiments, the insulating member includes a body portion and an abutting portion. The body portion is disposed between the wall portion and the electrode assembly along the thickness direction of the wall portion; the abutting portion is connected to a side of the body portion facing the wall portion, and the abutting portion abuts against the second surface. Along the thickness direction of the wall portion, a projection of the abutting portion does not overlap with a projection of the first protrusion, so that an interval space is formed between the body portion and the second surface, and the interval space is the avoidance portion.

In the above technical solution, the insulating member is provided with the body portion and the abutting portion connected to the side of the body portion facing the wall portion. The abutting portion abuts against the second surface of the wall portion, and the projection of the abutting portion in the thickness direction of the wall portion does not overlap with the projection of the first protrusion, so that the abutting portion is a structure supported between the body portion and the wall portion, and thus the body portion of the insulating member and the wall portion are structures spaced apart in the thickness direction of the wall portion. Thus, the interval space avoiding the first protrusion can be formed between the body portion of the insulating member and the second surface of the wall portion, so as to form the avoidance portion for avoiding the first protrusion, achieving a simple structure and facilitating assembly.

In some embodiments, the insulating member includes a plurality of abutting portions, the plurality of abutting portions are all connected to the side of the body portion facing the wall portion, and the plurality of abutting portions are spaced apart.

In the above technical solution, the plurality of abutting portions are connected to the side of the body portion facing the wall portion, and the plurality of abutting portions are spaced apart, so that the structural stability of the insulating member assembled between the electrode assembly and the wall portion can be further improved, the effect of the plurality of abutting portions in supporting the body portion can be improved, and thus the overall structural strength of the insulating member is enhanced. This reduces the phenomena such as deformation or collapse of the body portion during use so as to alleviate the phenomenon of mutual interference between the body portion and the first protrusion after deformation of the body portion, thereby helping to further improve the effect of the insulating member in avoiding the first protrusion.

In some embodiments, along the thickness direction of the wall portion, a minimum distance between the body portion and the first protrusion is L, satisfying L≥0.1 mm.

In the above technical solution, setting the minimum distance between the body portion and the first protrusion in the thickness direction of the wall portion to be greater than or equal to 0.1 mm helps to improve the effect of the avoidance portion of the insulating member in avoiding the first protrusion, so as to reduce the phenomenon that the body portion of the insulating member interferes with or causes abrasion to the first protrusion, thereby further improving the assembly quality of the battery cell.

In some embodiments, along the thickness direction of the wall portion, the wall portion has a first surface and a second surface opposite each other; where the pressure relief groove is provided on the first surface, and the pressure relief groove is located between the first surface and the second surface in the thickness direction of the wall portion.

In the above technical solution, the pressure relief groove is provided on the first surface, and the pressure relief groove is a structure located between the first surface and the second surface in the thickness direction of the wall portion, so that no protrusion structure is formed in a region of the second surface corresponding to the pressure relief groove, which helps to alleviate the interference phenomenon between the region of the wall portion where the pressure relief groove is provided and other components, thereby improving the assembly quality of the battery cell.

In some embodiments, the first surface is parallel to the second surface.

In the above technical solution, setting the first surface and the second surface to be parallel to each other helps to further alleviate the interference phenomenon between the region of the wall portion where the pressure relief groove is provided and other components, thereby further improving the assembly quality of the battery cell.

In some embodiments, along the thickness direction of the wall portion, the second surface faces the electrode assembly.

In the above technical solution, the second surface is set as a structure facing the electrode assembly, so that the pressure relief groove is a structure provided on a surface of a side of the wall portion facing away from the electrode assembly, which facilitates the processing and formation of the pressure relief groove on the wall portion and helps to reduce the difficulty of providing the pressure relief groove on the wall portion, thereby improving the production efficiency of the battery cell.

In some embodiments, the pressure relief groove is formed on the wall portion by etching.

In the above technical solution, the pressure relief groove is formed on the wall portion by etching, so that the pressure relief groove is located between the first surface and the second surface of the wall portion in the thickness direction of the wall portion, and thus no protrusion structure is formed in the region of the second surface corresponding to the pressure relief groove, which helps to reduce the processing difficulty of the pressure relief groove on the wall portion.

In some embodiments, the pressure relief groove is an annular groove.

In the above technical solution, the pressure relief groove is set to be an annular groove structure, so that the overall region of the wall portion located on an inner side of the pressure relief groove can fall off after the overall wall portion cracks along the pressure relief groove during pressure relief of the battery cell, which helps to expand a pressure relief area of the battery cell, and thus further increases a pressure relief rate of the battery cell, so as to reduce the risk such as explosion or bursting caused by untimely pressure relief of the battery cell, thereby effectively improving the use reliability of the battery cell.

In some embodiments, the housing includes a shell and two end covers; an accommodating cavity is formed inside the shell; the electrode assembly is accommodated in the accommodating cavity; two opposite ends of the shell are each provided with an opening, and the two openings are both in communication with the accommodating cavity; and the two end covers respectively close the two openings; where the shell includes the wall portion; or one of the two end covers is the wall portion.

In the above technical solution, the shell of the housing is provided with openings at both the two opposite ends, and the two end covers respectively close the two openings. By setting the wall portion of the housing as a wall of the shell, the use of such structure in the battery cell enables the region of the housing provided with the pressure relief groove to be away from the end covers, which effectively alleviates the phenomenon that stress generated by the mutual connection between the end covers and the shell acts on the region of the wall portion where the pressure relief groove is provided, so as to reduce the influence on the region of the wall portion where the pressure relief groove is provided. This helps to reduce the risk of cracking or structural strength reduction of the region of the wall portion where the pressure relief groove is provided under the pulling action of the stress, thereby improving the service life and use reliability of the battery cell. By setting the wall portion as one of the two end covers, the use of such structure in the battery cell facilitates assembly of the battery cell from the two ends of the shell respectively, which helps to reduce the manufacturing difficulty and assembly difficulty of the battery cell, facilitates the provision of the pressure relief groove on the end cover, and helps to reduce the manufacturing difficulty of the battery cell, thereby improving the production efficiency of the battery cell.

In some embodiments, the housing includes a shell and an end cover; an accommodating cavity having an opening is formed inside the shell; the electrode assembly is accommodated in the accommodating cavity; and the end cover closes the opening; where the shell includes the wall portion; or the end cover is the wall portion.

In the above technical solution, by setting the wall portion of the housing as a wall of the shell, the use of such structure in the battery cell enables the region of the housing provided with the pressure relief groove to be away from the end cover, which effectively alleviates the phenomenon that stress generated by the mutual connection between the end cover and the shell acts on the region of the wall portion where the pressure relief groove is provided, so as to reduce the influence on the region of the wall portion where the pressure relief groove is provided, and further helps to reduce the risk of cracking or structural strength reduction of the region of the wall portion where the pressure relief groove is provided under the pulling action of stress, thereby improving the service life and use reliability of the battery cell. By setting the wall portion of the housing as the end cover of the housing for closing the opening, the use of such structure in the battery cell facilitates the provision of the pressure relief groove on the end cover, which helps to reduce the manufacturing difficulty of the battery cell, thereby improving the production efficiency of the battery cell.

According to a second aspect, an embodiment of this application further provides a battery, including the above-mentioned battery cell.

According to a third aspect, an embodiment of this application further provides an electric apparatus, including the above-mentioned battery cell, where the battery cell is configured to provide electrical energy.

### BRIEF DESCRIPTION OF DRAWINGS

To explain the technical solutions of the embodiments of this application more clearly, the drawings required to be used in the embodiments are briefly introduced below. It should be understood that the following drawings only show some embodiments of this application, and therefore should not be regarded as limiting the scope. For those of ordinary skill in the art, other relevant drawings can also be obtained based on these drawings without creative efforts.
FIG. 1 is a schematic structural diagram of a vehicle according to some embodiments of this application;
FIG. 2 is a structural exploded view of a battery according to some embodiments of this application;
FIG. 3 is a schematic structural diagram of a battery cell according to some embodiments of this application;
FIG. 4 is a structural exploded view of a battery cell according to some embodiments of this application;
FIG. 5 is a partial cross-sectional view of a battery cell according to some embodiments of this application;
FIG. 6 is a partial cross-sectional view of a housing of a battery cell according to some embodiments of this application;
FIG. 7 is a cross-sectional view of a housing of a battery cell according to still some embodiments of this application; and
FIG. 8 is a partial enlarged view of portion A of the housing shown in FIG. 7.

Reference signs: 1000. vehicle; 100. battery; 10. box; 11. first box body; 12. second box body; 20. battery cell; 21. housing; 211. wall portion; 2111. pressure relief groove; 2112. first surface; 2113. second surface; 2114. first groove; 2115. first protrusion; 21151. first side wall; 21152. first bottom wall; 21152a. main portion; 21152b. arch portion; 21152c. second groove; 212. shell; 2121. opening; 213. end cover; 22. electrode assembly; 221. tab; 23. electrode terminal; 24. insulating member; 241. avoidance portion; 242. body portion; 243. abutting portion; 200. controller; 300. motor; and X. thickness direction of wall portion.

### DESCRIPTION OF EMBODIMENTS

To make the objectives, technical solutions, and advantages of the embodiments of this application clearer, the technical solutions in the embodiments of this application are clearly described below in conjunction with the drawings in the embodiments of this application. Obviously, the described embodiments are some embodiments rather than all embodiments of this application. Based on the embodiments of this application, all other embodiments obtained by those of ordinary skill in the art without creative efforts shall fall within the protection scope of this application.

Unless otherwise defined, all technical and scientific terms used in this application have the same meaning as commonly understood by those skilled in the art in the technical field of this application; the terms used in the specification of this application are only for the purpose of describing specific embodiments, and are not intended to limit this application; and the terms "include", "comprise", "have", and any variations thereof in the specification and claims of this application and the above description of the drawings are intended to cover non-exclusive inclusion. The terms "first", "second", and the like in the specification and claims of this application or in the above drawings are used to distinguish different objects rather than to describe a specific order or primary-secondary relationship.

Reference to "embodiment" in this application means that a particular feature, structure, or characteristic described in connection with this embodiment can be included in at least one embodiment of this application. The appearance of this phrase in various places in the specification does not necessarily refer to the same embodiment, nor is it an independent or alternative embodiment mutually exclusive with other embodiments.

In the description of this application, it should be noted that, unless otherwise clearly specified and limited, the terms "mounting", "connection", "join", and "attachment" should be understood in a broad sense, for example, it may be a fixed connection, a detachable connection, or an integral connection; it may be a direct connection, or an indirect connection through an intermediate medium; and it may be an internal communication between two elements. For those of ordinary skill in the art, the specific meanings of the above terms in this application can be understood according to specific circumstances.

The term "and/or" in this application is only an association relationship describing associated objects, representing that three relationships may exist. For example, A and/or B may represent the following three cases: only A exists, both A and B exist, and only B exists. In addition, the character "/" in this application generally indicates that the contextually associated objects are in an "or" relationship.

In the embodiments of this application, the same reference signs denote the same components, and for the brevity, detailed descriptions of the same components are omitted in different embodiments. It should be understood that the dimensions such as thickness, length, and width of various components in the embodiments of this application shown in the drawings, as well as the overall thickness, length, and width of an integrated apparatus, are only exemplary descriptions, and should not constitute any limitation to this application.

"A plurality of" appearing in this application refers to two or more (including two).

In the embodiments of this application, the battery cell may be a secondary battery. A secondary battery refers to a battery cell that can continue to be used by activating an active material through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead-acid battery, or the like, which is not limited in the embodiments of this application.

A battery cell generally includes an electrode assembly. The electrode assembly includes a positive electrode, a negative electrode, and a separator. During charging and discharging of the battery cell, active ions (such as lithium ions) are intercalated and deintercalated back and forth between the positive electrode and the negative electrode. The separator is disposed between the positive electrode and the negative electrode, to prevent a short circuit between the positive and negative electrodes and allow active ions to pass through.

In some embodiments, the positive electrode may be a positive electrode sheet, and the positive electrode sheet may include a positive electrode current collector and a positive electrode active material disposed on at least one surface of the positive electrode current collector.

In an example, the positive electrode current collector has two opposite surfaces in its thickness direction, and the positive electrode active material is disposed on either or both of the two opposite surfaces of the positive electrode current collector.

In an example, the positive electrode current collector may be a metal foil or a composite current collector. For example, as a metal foil, aluminum having a surface subjected to silver treatment, stainless steel having a surface subjected to silver treatment, stainless steel, copper, aluminum, nickel, carbon electrode, carbon, nickel, titanium, or the like may be used. The composite current collector may include a polymer material substrate and a metal layer. The composite current collector may be formed by forming a metal material (aluminum, aluminum alloy, nickel, nickel alloy, titanium, titanium alloy, silver, silver alloy, or the like) on a polymer material substrate (such as a substrate of polypropylene, polyethylene terephthalate, polybutylene terephthalate, polystyrene, or polyethylene).

In an example, the positive electrode active material may include at least one of the following materials: lithium-containing phosphate, lithium transition metal oxide, and their respective modified compounds. However, this application is not limited to these materials, and other conventional materials that can be used as positive electrode active materials for batteries may also be used. These positive electrode active materials may be used alone or two or more of them are used in combination. Examples of the lithium-containing phosphate may include but are not limited to at least one of lithium iron phosphate (such as LiFePO₄ (which may also be referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. Examples of the lithium transition metal oxide may include but are not limited to at least one of lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (which may also be referred to as NCM333), LiNi_{0.5}Co_{0.2}Mn_{0.3}O₂ (which may also be referred to as NCM523), LiNi_{0.5}Co_{0.25}Mn_{0.25}O₂ (which may also be referred to as NCM211), LiNi_{0.6}Co_{0.2}Mn_{0.2}O₂ (which may also be referred to as NCM622), LiNi_{0.8}Co_{0.1}Mn_{0.1}O₂ (which may also be referred to as NCM811)), lithium nickel cobalt aluminum oxide (such as LiNi_{0.85}Co_{0.15}Al_{0.05}O₂), and modified compounds thereof.

In some embodiments, the positive electrode may use foam metal. The foam metal may be nickel foam, copper foam, aluminum foam, foam alloy, or the like. When foam metal is used as the positive electrode, a surface of the foam metal may not be provided with the positive electrode active material, and certainly may alternatively be provided with the positive electrode active material. In an example, a lithium source material, potassium metal, or sodium metal may fill into and/or deposit in the foam metal, where the lithium source material is the lithium metal and/or a lithium-rich material.

In some embodiments, the negative electrode may be a negative electrode sheet, and the negative electrode sheet may include a negative electrode current collector.

In an example, the negative electrode current collector may be a metal foil, foam metal, or a composite current collector. For example, as a metal foil, aluminum or stainless steel having a surface subjected to silver treatment, stainless steel, copper, aluminum, nickel, carbon electrode, nickel, titanium, or the like may be used. The foam metal may be nickel foam, copper foam, aluminum foam, foam alloy, or the like. The composite current collector may include a polymer material substrate and a metal layer. The composite current collector may be formed by forming a metal material (copper, copper alloy, nickel, nickel alloy, titanium, titanium alloy, silver, silver alloy, or the like) on a polymer material substrate (such as a substrate of polypropylene, polyethylene terephthalate, polybutylene terephthalate, polystyrene, or polyethylene).

In an example, the negative electrode sheet may include a negative electrode current collector and a negative electrode active material disposed on at least one surface of the negative electrode current collector.

In an example, the negative electrode current collector has two opposite surfaces in its thickness direction, and the negative electrode active material is disposed on either or both of the two opposite surfaces of the negative electrode current collector.

In an example, the negative electrode active material may use negative electrode active materials for battery cells well known in the art. In an example, the negative electrode active material may include at least one of the following materials: artificial graphite, natural graphite, soft carbon, hard carbon, a silicon-based material, a tin-based material, lithium titanate, and the like. The silicon-based material may be at least one selected from elemental silicon, a silicon oxide compound, a silicon-carbon composite, a silicon-nitrogen composite, and silicon alloy. The tin-based material may be at least one selected from elemental tin, a tin oxide compound, and tin alloy. However, this application is not limited to these materials, and other conventional materials that can be used as negative electrode active materials for batteries may also be used. These negative electrode active materials may be used alone or two or more of them are used in combination.

In some embodiments, the positive electrode current collector may be made of aluminum, and the negative electrode current collector may be made of copper.

In some embodiments, the electrode assembly further includes a separator, and the separator is disposed between the positive electrode and the negative electrode.

In some embodiments, the separator is a separating film. Various types of separating films may be used, and any well-known porous separating film with good chemical stability and mechanical stability may be selected.

In an example, the separating film may be made of a material including at least one of glass fiber, non-woven fabric, polyethylene, polypropylene, and polyvinylidene fluoride. The separating film may be a single-layer film or a multi-layer composite film. When the separating film is a multi-layer composite film, materials of layers may be the same or different. The separator may be an independent component located between the positive and negative electrodes, or may be attached to surfaces of the positive and negative electrodes.

In some embodiments, the separator is a solid electrolyte. The solid electrolyte is disposed between the positive electrode and the negative electrode and is used to transport ions as well as isolate the positive and negative electrodes.

In some embodiments, the battery cell further includes an electrolyte, and the electrolyte is used to conduct ions between the positive and negative electrodes. The electrolyte may be liquid, gel, or solid. The liquid electrolyte includes an electrolytic salt and a solvent.

In some embodiments, the electrolytic salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may alternatively be an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ether.

The gel electrolyte includes a polymer serving as a skeleton network of the electrolyte, which is combined with an ionic liquid-lithium salt.

The solid electrolyte includes a polymer solid electrolyte, an inorganic solid electrolyte, and a composite solid electrolyte.

In an example, the polymer solid electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

In an example, the inorganic solid electrolyte may include one or more of a solid oxide electrolyte (crystalline perovskite, a sodium superionic conductor, garnet, or an amorphous LiPON film), a solid sulfide electrolyte (a crystalline lithium superionic conductor (lithium germanium phosphorus sulfide or argyrodite), or amorphous sulfide), a solid halide electrolyte, a solid nitride electrolyte, and a solid hydride electrolyte.

In an example, the composite solid electrolyte is formed by adding inorganic solid electrolyte fillers to a polymer solid electrolyte.

In some embodiments, the electrode assembly is a wound structure. The positive electrode sheet and the negative electrode sheet are wound into a wound structure.

In some embodiments, the electrode assembly is a stacked structure.

In an example, a plurality of positive electrode sheets and a plurality of negative electrode sheets may be provided respectively, and the plurality of positive electrode sheets and the plurality of negative electrode sheets are alternately stacked.

In an example, a plurality of positive electrode sheets may be provided, the negative electrode sheet is folded to form a plurality of stacked folded segments, and one positive electrode sheet is sandwiched between adjacent folded segments.

In an example, the positive electrode sheet and the negative electrode sheet are each folded to form a plurality of stacked folded segments.

In an example, a plurality of separators may be provided and respectively disposed between any adjacent positive electrode sheets or negative electrode sheets.

In an example, the separator may be disposed continuously, which is disposed between any adjacent positive electrode sheets or negative electrode sheets by folding or winding.

In some embodiments, the electrode assembly may be in a cylindrical shape, a flat shape, a polygonal prism shape, or the like.

In some embodiments, the electrode assembly is provided with tabs, and the tabs can lead a current out of the electrode assembly. The tabs include a positive tab and a negative tab.

In some embodiments, the battery cell may include a housing. The housing is configured to encapsulate components such as the electrode assembly and the electrolyte. The housing may be a steel housing, an aluminum housing, a plastic housing (such as polypropylene), a composite metal housing (such as a copper-aluminum composite housing), an aluminum-plastic film, or the like.

In an example, the battery cell may be a cylindrical battery cell, a prismatic battery cell, a pouch battery cell, or a battery cell of other shapes. The prismatic battery cell includes but is not limited to a square-shell battery cell, a blade-shaped battery cell, and a polygonal prism battery, where the polygonal prism battery is, for example, a hexagonal prism battery.

The battery mentioned in the embodiments of this application refers to a single physical module including one or more battery cells to provide higher voltage and capacity.

In some embodiments, the battery may be a battery module. When there are a plurality of battery cells, the plurality of battery cells are arranged and fixed to form one battery module.

In some embodiments, the battery may be a battery pack. The battery pack includes a box and a battery cell, and the battery cell or battery module is accommodated in the box.

In some embodiments, the box may be used as a portion of a chassis structure of a vehicle. For example, a portion of the box may become at least a portion of the floor of the vehicle, or a portion of the box may become at least a portion of cross beams and longitudinal beams of the vehicle.

In some embodiments, the battery may be an energy storage apparatus. Energy storage apparatuses include energy storage containers, energy storage cabinets, and the like.

Batteries have outstanding advantages such as high energy density, low environmental pollution, high power density, long service life, wide application range, and small self-discharge coefficient, and therefore are an important part of new energy development at present. For development of battery technologies, various design factors need to be considered simultaneously, for example, performance parameters such as energy density, cycle life, discharge capacity, and charge-discharge rate. In addition, the safety of the battery also needs to be considered.

For a general battery cell, to ensure the use safety of the battery cell, a pressure relief structure is usually provided on a housing of the battery cell, so that an internal pressure of the battery cell is relieved through the pressure relief structure, thereby effectively improving the use safety of the battery cell. In the related art, a housing of a battery cell is usually made of aluminum, which results in low structural strength of the housing of the battery cell, making the battery cell extremely prone to swelling deformation during use. This causes a large strain and strain amplitude in the pressure relief structure on the housing and thus leads to premature valve opening for pressure relief of the pressure relief structure, which causes low-cycle fatigue in the pressure relief structure provided on the wall portion and thus leads to poor use stability of the pressure relief structure provided on the wall portion, easily causing premature actuation for pressure relief of the battery cell during use. This is not conducive to improving the service life and use reliability of the battery cell.

In view of the above considerations, to resolve the problems of short service life and low use reliability of battery cells, an embodiment of this application provides a battery cell. The battery cell includes a housing and an electrode assembly. The housing has a wall portion. The electrode assembly is accommodated in the housing. The housing is made of steel, and the wall portion is provided with a pressure relief groove. The wall portion is configured to be capable of cracking along at least a portion of the pressure relief groove when the battery cell relieves pressure, so as to relieve the internal pressure of the battery cell.

In the battery cell with this structure, the housing of the battery cell is made of steel, and the wall portion of the housing is provided with the pressure relief groove, so that when the battery cell relieves pressure, the wall portion is capable of cracking along at least a portion of the pressure relief groove to relieve the internal pressure of the battery cell, thereby enabling a pressure relief structure of the battery cell to be a structure integrally formed with the housing. The use of such structure in the battery cell can enhance the structural strength of the housing and the structural strength of a region of the wall portion where the pressure relief groove is provided, reduce the risk of explosion of the battery cell during use, and alleviate the phenomenon of swelling deformation of the housing of the battery cell during use, which helps to reduce the strain and strain amplitude of the region of the wall portion where the pressure relief groove is provided and thus can reduce the occurrence of low-cycle fatigue in the region of the wall portion where the pressure relief groove is provided, so as to reduce fatigue damage in the region of the wall portion where the pressure relief groove is provided. This helps to reduce the risk of premature valve opening for pressure relief of the battery cell, thereby improving the service life and use reliability of the battery cell.

The battery cell disclosed in this embodiment of this application may be used in, but not limited to, electric apparatuses such as vehicles, ships, or aircraft. A power system of such electric apparatus may be formed by the battery cell, battery, and the like disclosed in this application. This helps to alleviate the problem of premature actuation and valve opening of the battery cell during use, thereby improving the service life and use reliability of the battery cell.

An embodiment of this application provides an electric apparatus using a battery as a power source. The electric apparatus may be, but is not limited to, a mobile phone, a tablet, a laptop, an electric toy, an electric tool, a battery car, an electric vehicle, a ship, and a spacecraft. Electric toys may include fixed or mobile electric toys, for example, game consoles, electric toy cars, electric toy ships, and electric toy airplanes; and spacecrafts may include airplanes, rockets, space shuttles, spaceships, and the like.

For convenience of description, the following embodiments are described by using an example in which an electric apparatus is a vehicle according to an embodiment of this application.

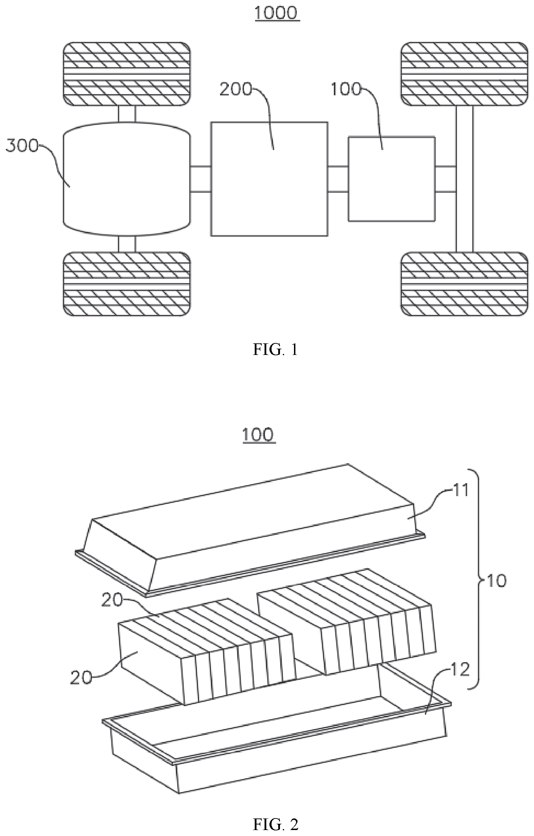

Reference is made to FIG. 1, where FIG. 1 is a schematic structural diagram of a vehicle 1000 according to some embodiments of this application. The vehicle 1000 may be a fuel vehicle, a gas vehicle, or a new energy vehicle. The new energy vehicle may be a battery electric vehicle, a hybrid vehicle, an extended-range vehicle, or the like. The vehicle 1000 is provided with a battery 100 inside. The battery 100 may be provided at the bottom of the vehicle 1000, at the front of the vehicle 1000, or at the rear of the vehicle 1000. The battery 100 may be configured to supply power to the vehicle 1000. For example, the battery 100 may serve as an operating power source or a service power source of the vehicle 1000. The vehicle 1000 may further include a controller 200 and a motor 300. The controller 200 is configured to control the battery 100 to supply power to the motor 300, for example, for operating power demands during startup, navigation, and driving of the vehicle 1000.

In some embodiments of this application, the battery 100 can serve not only as the operating power source or service power source of the vehicle 1000, but also as the driving power source of the vehicle 1000, replacing or partially replacing fuel or natural gas to provide driving power for the vehicle 1000.

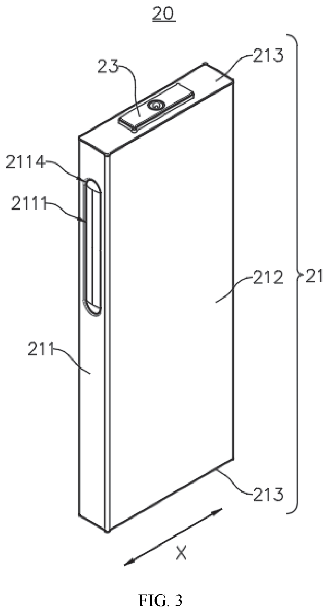

Reference is made to FIG. 2 and FIG. 3, where FIG. 2 is a structural exploded view of a battery 100 according to some embodiments of this application, and FIG. 3 is a schematic structural diagram of a battery cell 20 according to some embodiments of this application. The battery 100 includes a box 10 and a battery cell 20, and the battery cell 20 is configured to be accommodated in the box 10.

The box 10 is configured to provide an assembly space for the battery cell 20, and the box 10 may adopt various structures. In some embodiments, the box 10 may include a first box body 11 and a second box body 12. The first box body 11 and the second box body 12 cover each other, and the first box body 11 and the second box body 12 jointly define the assembly space for accommodating the battery cell 20. The second box body 12 may be a hollow structure open at one end, and the first box body 11 may be a plate-like structure. The first box body 11 covers an open side of the second box body 12, so that the first box body 11 and the second box body 12 jointly define the assembly space. The first box body 11 and the second box body 12 may alternatively each be a hollow structure open on one side, and the open side of the first box body 11 covers the open side of the second box body 12.

Certainly, the box 10 formed by the first box body 11 and the second box body 12 may have various shapes, such as a cylindrical shape, a rectangular shape, or a square shape. Exemplarily, in FIG. 2, the box 10 is in a rectangular shape.

In the battery 100, there may be one or a plurality of battery cells 20 disposed in the box 10. When a plurality of battery cells 20 are disposed in the box 10, the plurality of battery cells 20 may be connected in series, in parallel, or in series-parallel. Being connected in series-parallel means that there are both a series connection and a parallel connection between the plurality of battery cells 20. The plurality of battery cells 20 may be directly connected in series, in parallel, or in series-parallel, and then an entirety formed by the plurality of battery cells 20 is accommodated in the box 10. Certainly, the battery 100 may alternatively be formed in a manner that a plurality of battery cells 20 are first connected in series, in parallel, or in series-parallel to form a battery module, and then a plurality of battery modules are connected in series, in parallel, or in series-parallel to form an entirety that is accommodated in the box 10.

In some embodiments, the battery 100 may further include other structures. For example, the battery 100 may further include a busbar component, and the busbar component is configured to connect the plurality of battery cells 20 to realize electrical connection between the plurality of battery cells 20.

Each battery cell 20 may be a secondary battery or a primary battery, and it may alternatively be a lithium-sulfur battery, a sodium-ion battery, or a magnesium-ion battery, but is not limited thereto. The battery cell 20 may be in a rectangular shape, a cylindrical shape, a prismatic shape, or other shapes. Exemplarily, in FIG. 3, the battery cell 20 is a rectangular structure.

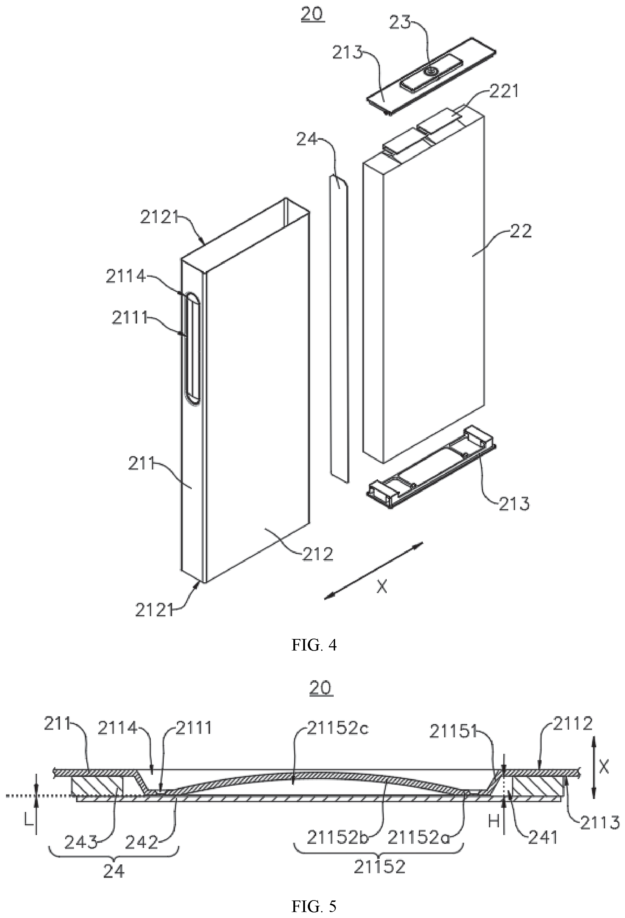

According to some embodiments of this application, reference is made to FIG. 3, and reference is further made to FIG. 4 and FIG. 5, where FIG. 4 is a structural exploded view of a battery cell 20 according to some embodiments of this application, and FIG. 5 is a partial cross-sectional view of a battery cell 20 according to some embodiments of this application. This application provides a battery cell 20. The battery cell 20 includes a housing 21 and an electrode assembly 22. The housing 21 has a wall portion 211, and the electrode assembly 22 is accommodated in the housing 21. The housing 21 is made of steel, and the wall portion 211 is provided with a pressure relief groove 2111. The wall portion 211 is configured to be capable of cracking along at least a portion of the pressure relief groove 2111 when the battery cell 20 relieves pressure, so as to relieve the internal pressure of the battery cell 20.

The housing 21 may further be configured to accommodate an electrolyte, for example, an electrolyte solution. The housing 21 may be in various structural forms, such as a cylinder, a rectangular parallelopiped, or a prismatic structure. The housing 21 is made of steel, which may be low-carbon steel, medium-carbon steel, high-carbon steel, or the like.

In some embodiments, as shown in FIG. 4, the housing 21 may include a shell 212 and two end covers 213. The shell 212 is a hollow structure with openings 2121 on two opposite sides. One end cover 213 correspondingly covers one opening 2121 of the shell 212 to form a sealed connection, so as to form a sealed space for accommodating the electrode assembly 22 and the electrolyte. In other words, the shell 212 is provided with openings 2121 on both the two opposite sides, and the two end covers 213 respectively cover the two sides of the shell 212 to close the corresponding openings 2121.

Optionally, the wall portion 211 provided with a pressure relief groove 2111 may be one of the two end covers 213 of the housing 21, or may be one of a plurality of walls of the shell 212. Exemplarily, in FIG. 4, the wall portion 211 provided with the pressure relief groove 2111 is one of the plurality of walls of the shell 212. Certainly, the structure of the battery cell 20 is not limited thereto. In other embodiments, the battery cell 20 may alternatively be another structure. For example, the wall portion 211 provided with the pressure relief groove 2111 may alternatively be one of the two end covers 213 of the housing 21.

Certainly, it can be understood that the housing 21 is not limited to the above structure, and the housing 21 may alternatively be another structure. For example, the housing 21 may include a shell 212 and one end cover 213. An accommodating cavity is formed inside the shell 212, the accommodating cavity is configured to accommodate the electrode assembly 22, and the accommodating cavity has an opening 2121. In other words, the shell 212 is a hollow structure with an opening 2121 at one end, and the end cover 213 covers the opening 2121 of the shell 212 to form a sealed connection, so as to form a sealed space for accommodating the electrode assembly 22 and the electrolyte. The shell 212 includes a second bottom wall and a second side wall that are integrally formed. The second side wall is disposed around the second bottom wall. One end of the second side wall is connected to the second bottom wall, and the other end encloses the opening 2121. The end cover 213 covers the opening 2121 and is disposed opposite the second bottom wall. The second bottom wall and the second side wall jointly define the accommodating cavity for accommodating the electrode assembly 22. In these embodiments, the wall portion 211 provided with the pressure relief groove 2111 may be the end cover 213 of the housing 21, or may be one of a plurality of walls of the second bottom wall or the second side wall of the shell 212.

During assembly of the battery cell 20, the electrode assembly 22 may be first placed into the shell 212, the shell 212 is filled with an electrolyte solution, and then the end cover 213 covers the opening 2121 of the shell 212 to complete the assembly of the battery cell 20.

The housing 21 may have various shapes, such as a cylindrical shape and a rectangular shape. The shape of the housing 21 may be determined according to a specific shape of the electrode assembly 22. For example, if the electrode assembly 22 is a cylindrical structure, the housing 21 may be a cylindrical structure; and if the electrode assembly 22 is a rectangular structure, the housing 21 may be a rectangular structure. Exemplarily, in FIG. 3 and FIG. 4, the housing 21 is a rectangular structure.

In these embodiments of this application, the wall portion 211 is provided with the pressure relief groove 2111, and the wall portion 211 is configured to be capable of cracking along at least a portion of the pressure relief groove 2111 when the battery cell 20 relieves pressure, so as to relieve the internal pressure of the battery cell 20. In other words, a region of the wall portion 211 where the pressure relief groove 2111 is provided forms a weak structure of the wall portion 211. The weak structure is a pressure relief structure of the battery cell 20 for relieving the internal pressure of the battery cell 20, so that when an internal pressure or temperature of the battery cell 20 reaches a predetermined value, the wall portion 211 can crack along at least a portion of a bottom wall of the pressure relief groove 2111, so as to relieve the internal pressure of the battery cell 20. In other words, a pressure relief component of the battery cell 20 for pressure relief is integrally formed with the wall portion 211 of the housing 21.

Optionally, the pressure relief groove 2111 may be provided on a surface of a side of the wall portion 211 facing the electrode assembly 22, or may be provided on a surface of a side of the wall portion 211 facing away from the electrode assembly 22. Similarly, the pressure relief groove 2111 may alternatively have various shapes. For example, the pressure relief groove 2111 may be a strip structure extending along a linear trajectory, a "U"-shaped structure, a "V"-shaped structure, an "S"-shaped structure, an "N"-shaped structure, an "H"-shaped structure, a "Y"-shaped structure, a double "Y"-shaped structure, a rectangular structure, a triangular structure, a circular structure, an elliptical structure, or the like. In addition, the pressure relief groove 2111 may be a multi-level groove provided along a thickness direction X of the wall portion, or may be just a single-level groove.

Exemplarily, the pressure relief groove 2111 is provided on the surface of the side of the wall portion 211 facing away from the electrode assembly 22, and the pressure relief groove 2111 is an annular groove structure.

It should be noted that the electrode assembly 22 is a component in the battery cell 20 where electrochemical reactions take place. The electrode assembly 22 may be various structures. For example, the electrode assembly 22 may be a wound structure formed by winding a positive electrode sheet, a separator, and a negative electrode sheet, or may be a stacked structure formed by stacking a positive electrode sheet, a separator, and a negative electrode sheet.

Exemplarily, the separator is a separating film, and a main material of the separating film may be selected from at least one of glass fiber, non-woven fabric, polyethylene, polypropylene, and polyvinylidene fluoride.

In FIG. 4, the battery cell 20 includes two electrode terminals 23, and the two electrode terminals 23 are respectively mounted on the two end covers 213 in an insulated manner. Correspondingly, two ends of the electrode assembly 22 in a thickness direction of the end covers 213 are each provided with a tab 221, and the tabs 221 located at the two ends of the electrode assembly 22 have opposite polarities, so that a positive electrode and a negative electrode of the electrode assembly 22 can be respectively inputted or outputted. The tabs 221 located at the two ends of the electrode assembly 22 are respectively electrically connected to the two electrode terminals 23. It should be noted that the tab 221 of the electrode assembly 22 is a component formed by stacking and connecting regions on the positive electrode sheet that are not coated with a positive electrode active material layer, or a component formed by stacking and connecting regions on the negative electrode sheet that are not coated with a negative electrode active material layer. If the tab 221 is configured to output the positive electrode of the electrode assembly 22, the tab 221 is a component formed by stacking and connecting the regions on the positive electrode sheet that are not coated with the positive electrode active material layer; and if the tab 221 is configured to output the negative electrode of the electrode assembly 22, the tab 221 is a component formed by stacking and connecting the regions on the negative electrode sheet that are not coated with the negative electrode active material layer.

Certainly, the structure of the battery cell 20 is not limited thereto. In other embodiments, the two electrode terminals 23 may alternatively be disposed on the same end cover 213, or may both be disposed on the shell 212, or one electrode terminal 23 may be disposed on the end cover 213 and the other electrode terminal 23 may be disposed on the shell 212.

Optionally, there may be one or a plurality of electrode assemblies 22 accommodated in the housing 21. Exemplarily, in FIG. 4, only one electrode assembly 22 is disposed in the housing 21 of the battery cell 20. Certainly, in other embodiments, there may alternatively be two, three, four, five, six, seven, or eight electrode assemblies 22 accommodated in the housing 21.

The electrode terminal 23 plays a role in inputting or outputting the electrical energy of the battery cell 20, and the electrode terminal 23 is electrically connected to the tab 221 to input or output the electrical energy of the battery cell 20. It should be noted that the electrode terminal 23 is mounted on the end cover 213 of the housing 21 in an insulated manner. In other words, there is no electrical connection between the electrode terminal 23 and the end cover 213 of the housing 21.

Optionally, the electrode terminal 23 may alternatively be made of various materials. For example, the electrode terminal 23 may be made of copper, iron, aluminum, steel, aluminum alloy, or the like.

In some embodiments, the battery cell 20 may further include two current collecting members. Both of the two current collecting members are disposed in the housing 21, and each current collecting member is configured to connect one electrode terminal 23 and a tab 221 with the same polarity in the electrode assembly 22, so as to realize electrical connection between the electrode terminal 23 and the electrode assembly 22, which helps to reduce the assembly difficulty between the tab 221 and the electrode terminal 23.

Exemplarily, the current collecting member may also be made of various materials. For example, the current collecting member may be made of copper, iron, aluminum, steel, aluminum alloy, or the like.

In these embodiments, the housing 21 of the battery cell 20 is made of steel, and the wall portion 211 of the housing 21 is provided with the pressure relief groove 2111, so that when the battery cell 20 relieves pressure, the wall portion 211 is capable of cracking along at least a portion of the pressure relief groove 2111 to relieve the internal pressure of the battery cell 20, thereby enabling a pressure relief structure of the battery cell 20 to be a structure integrally formed with the housing 21. The use of such structure in the battery cell 20 enhances the structural strength of the housing 21 and the structural strength of a region of the wall portion 211 where the pressure relief groove 2111 is provided, reduces the risk of explosion of the battery cell 20 during use, and alleviates the phenomenon of swelling deformation of the housing 21 of the battery cell 20 during use, which helps to reduce the strain and strain amplitude of the region of the wall portion 211 where the pressure relief groove 2111 is provided and thus can reduce the occurrence of low-cycle fatigue in the region of the wall portion 211 where the pressure relief groove 2111 is provided, so as to reduce fatigue damage in the region of the wall portion 211 where the pressure relief groove 2111 is provided. This helps to reduce the risk of premature valve opening for pressure relief of the battery cell 20, thereby improving the service life and use reliability of the battery cell 20.

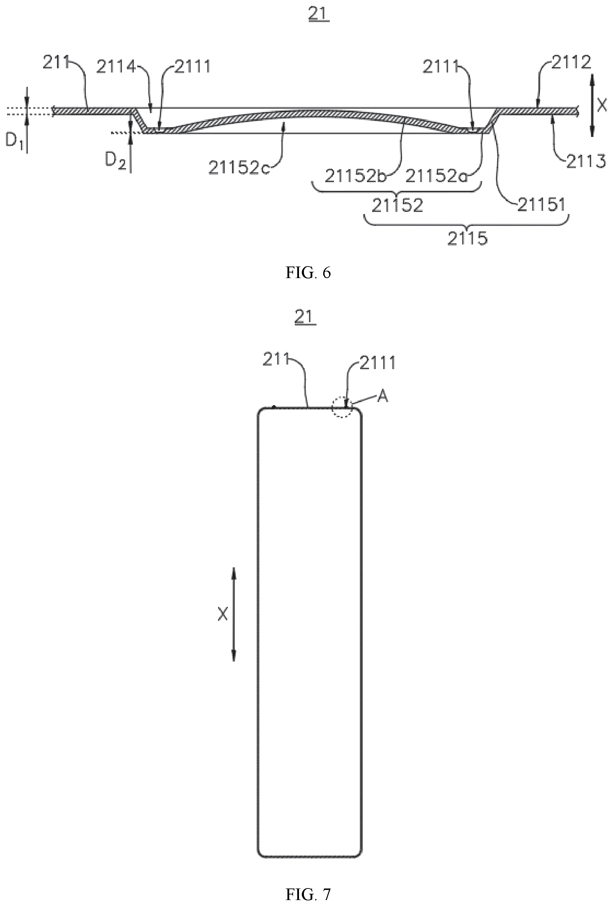

According to some embodiments of this application, reference is made to FIG. 5, and reference is further made to FIG. 6, where FIG. 6 is a partial cross-sectional view of the housing 21 of the battery cell 20 according to some embodiments of this application. A wall thickness of the wall portion 211 is D₁, satisfying 0.075 mm≤D₁≤0.4 mm.

The wall thickness D₁ of the wall portion 211 is a thickness of a body region of the wall portion 211 in the thickness direction X of the wall portion. In other words, a thickness of regions of the wall portion 211 where the pressure relief groove 2111 is not provided and where the first groove 2114 and the first protrusion 2115 are not formed in the thickness direction X of the wall portion is D₁.

Exemplarily, the wall thickness D₁ of the wall portion 211 may be 0.075 mm, 0.08 mm, 0.085 mm, 0.09 mm, 0.095 mm, 0.1 mm, 0.11 mm, 0.12 mm, 0.15 mm, 0.18 mm, 0.2 mm, 0.22 mm, 0.25 mm, 0.3 mm, 0.35 mm, 0.4 mm, or the like.

In these embodiments, the wall thickness of the wall portion 211 is to be 0.075 mm to 0.4 mm. On the one hand, setting the wall thickness of the wall portion 211 to be greater than or equal to 0.075 mm helps to enhance the structural strength of the wall portion 211, so as to reduce the risk of damage or cracking of the wall portion 211 and further mitigate the phenomenon of swelling deformation of the housing 21 of the battery cell 20 during use. On the other hand, setting the wall thickness of the wall portion 211 to be less than or equal to 0.4 mm reduces the difficulty of processing and forming the pressure relief groove 2111 on the wall portion 211, making it easier to provide the pressure relief groove 2111 on the wall portion 211, thereby helping to reduce the processing difficulty of the battery cell 20.

In some embodiments, reference is still made to FIG. 5 and FIG. 6, where the wall thickness of the wall portion 211 is D₁, satisfying 0.075 mm≤D₁≤0.25 mm.

In these embodiments, the wall thickness of the wall portion 211 is further set to be less than or equal to 0.25 mm to further reduce the difficulty of processing and forming the pressure relief groove 2111 on the wall portion 211, making it easier to provide the pressure relief groove 2111 on the wall portion 211, thereby helping to further reduce the processing difficulty of the battery cell 20.

According to some embodiments of this application, as shown in FIG. 6, along the thickness direction X of the wall portion, a minimum residual thickness of the pressure relief groove 2111 is D₂, and the wall thickness of the wall portion 211 is D₁, satisfying 0.08≤D₂/D₁≤0.3.

The minimum residual thickness D₂ of the pressure relief groove 2111 is a minimum thickness of the bottom wall of the pressure relief groove 2111 in the thickness direction X of the wall portion, and is also a minimum residual thickness of the region of the wall portion 211 where the pressure relief groove 2111 is provided.

Exemplarily, the minimum residual thickness D₂ of the pressure relief groove 2111 and the wall thickness D₁ of the wall portion 211 may be 0.08, 0.09, 0.1, 0.11, 0.12, 0.13, 0.14, 0.15, 0.18, 0.2, 0.22, 0.25, 0.26, 0.28, 0.3, or the like.

In these embodiments, the ratio of the minimum residual thickness of the pressure relief groove 2111 to the wall thickness of the wall portion 211 is set to be 0.08 to 0.3. On the one hand, setting the ratio of the minimum residual thickness of the pressure relief groove 2111 to the wall thickness of the wall portion 211 to be greater than or equal to 0.08 alleviates the phenomenon of excessive processing of the pressure relief groove 2111 on the wall portion 211, so as to reduce the difficulty of providing the pressure relief groove 2111 on the wall portion 211 and enhance the structural strength of the region of the wall portion 211 where the pressure relief groove 2111 is provided. This helps to alleviate the phenomena such as accidental cracking or damage in the region of the wall portion 211 where the pressure relief groove 2111 is provided, thereby improving the use stability of the battery cell 20. On the other hand, setting the ratio of the minimum residual thickness of the pressure relief groove 2111 to the wall thickness of the wall portion 211 to be less than or equal to 0.3 alleviates the phenomenon of insufficient depth of the pressure relief groove 2111 processed on the wall portion 211, which reduces a bursting pressure required for the pressure relief of the battery cell 20 and helps to improve the timeliness of the pressure relief of the battery cell 20. This reduces the risk such as explosion or bursting of the battery cell 20 during use, thereby improving the use reliability of the battery cell 20.

According to some embodiments of this application, as shown in FIG. 5 and FIG. 6, along the thickness direction X of the wall portion, the wall portion 211 has a first surface 2112 and a second surface 2113 opposite each other, the second surface 2113 faces the electrode assembly 22, the first surface 2112 is provided with a first groove 2114, a first protrusion 2115 protruding from the second surface 2113 is formed at a position of the wall portion 211 corresponding to the first groove 2114, and the pressure relief groove 2111 is provided on the first protrusion 2115.

The wall portion 211 has the first surface 2112 and the second surface 2113 opposite each other, and the second surface 2113 faces the electrode assembly 22. In other words, the wall portion 211 has the second surface 2113 facing the electrode assembly 22 and the first surface 2112 facing away from the electrode assembly 22 in the thickness direction X of the wall portion.

The first surface 2112 is provided with the first groove 2114, and the first protrusion 2115 protruding from the second surface 2113 is formed at the position of the wall portion 211 corresponding to the first groove 2114. In other words, the wall portion 211 is a structure provided with the first groove 2114 on the first surface 2112 and correspondingly provided with the first protrusion 2115 protruding from the second surface 2113, so that the wall portion 211 is a structure formed by stamping, in which one side is concave and the other side is convex.

The pressure relief groove 2111 is provided on the first protrusion 2115. In other words, the weak structure formed by providing the pressure relief groove 2111 on the wall portion 211 is located on the first protrusion 2115. Optionally, the pressure relief groove 2111 may be provided on the bottom wall of the first groove 2114, or may be provided on the bottom wall of the first groove 2114.

In these embodiments, the wall portion 211 is a concave-convex structure with the first groove 2114 formed on one side and the first protrusion 2115 formed on the other side, and the pressure relief groove 2111 on the wall portion 211 for pressure relief is provided on the first protrusion 2115. The use of such structure in the battery cell 20, on the one hand, facilitates the processing and formation of the pressure relief groove 2111 on the wall portion 211, which helps to improve a material flow form during the process of processing and forming the pressure relief groove 2111 on the wall portion 211, so as to improve the processing quality of the pressure relief groove 2111 and help to enhance the structural strength of the region of the wall portion 211 where the pressure relief groove 2111 is provided, thereby alleviating the phenomena such as deformation of the region of the wall portion 211 where the pressure relief groove 2111 is provided during use. On the other hand, the pressure relief groove 2111 can be provided on the first protrusion 2115 of the wall portion 211 that protrudes toward the inside of the battery cell 20, which helps to improve the protection effect on the region of the wall portion 211 where the pressure relief groove 2111 is provided. This can reduce the phenomena such as abrasion of the region of the wall portion 211 where the pressure relief groove 2111 is provided during assembly or use, thereby improving the use stability of the battery cell 20.

According to some embodiments of this application, reference is still made to FIG. 5 and FIG. 6, where the first protrusion 2115 includes a first side wall 21151 and a first bottom wall 21152, the first side wall 21151 is disposed around the first bottom wall 21152, and the first side wall 21151 is connected to the first bottom wall 21152, the first side wall 21151 and the first bottom wall 21152 jointly define the first groove 2114, and the pressure relief groove 2111 is provided on the first bottom wall 21152.

The first side wall 21151 of the first protrusion 2115 is also a side wall of the first groove 2114, so that the first side wall 21151 connects the first bottom wall 21152 and a portion of the wall portion 211 that is not provided with the first protrusion 2115. Correspondingly, the first bottom wall 21152 of the first protrusion 2115 is also the bottom wall of the first groove 2114, so that the first side wall 21151 and the first bottom wall 21152 of the first protrusion 2115 are structures that jointly enclose and define the first groove 2114.

The pressure relief groove 2111 is provided on the first bottom wall 21152. In other words, the pressure relief groove 2111 is provided on the bottom wall of the first groove 2114. Exemplarily, in FIG. 6, the pressure relief groove 2111 is provided on a surface of a side of the first bottom wall 21152 facing away from the electrode assembly 22. In other words, the pressure relief groove 2111 is provided on a bottom surface of the first groove 2114. Certainly, the structure of the battery cell 20 is not limited thereto. In other embodiments, the battery cell 20 may alternatively be another structure. For example, the pressure relief groove 2111 may alternatively be provided on a surface of a side of the first bottom wall 21152 facing the electrode assembly 22.

In these embodiments, the first protrusion 2115 includes the first side wall 21151 and the first bottom wall 21152, and the first side wall 21151 is disposed around the first bottom wall 21152, so that the first side wall 21151 and the first bottom wall 21152 of the first protrusion 2115 jointly enclose and define the first groove 2114. By providing the pressure relief groove 2111 on the first bottom wall 21152 of the first protrusion 2115, the pressure relief groove 2111 is a structure provided on the bottom wall of the first groove 2114. The use of such structure in the battery cell 20, on the one hand, facilitates the processing of the pressure relief groove 2111 on the first protrusion 2115, which helps to reduce the processing difficulty of the pressure relief groove 2111. On the other hand, the first side wall 21151 can also absorb and buffer part of the stress transmitted from the wall portion 211 to the first bottom wall 21152, so as to reduce the stress influence on the region of the first protrusion 2115 where the pressure relief groove 2111 is provided, thereby helping to improve the use reliability and stability of the battery cell 20.

According to some embodiments of this application, as shown in FIG. 6, the first bottom wall 21152 may include a main portion 21152a and an arch portion 21152b. The main portion 21152a connects the arch portion 21152b and the first side wall 21151, and the main portion 21152a surrounds a peripheral side of the arch portion 21152b. Along the thickness direction X of the wall portion, the arch portion 21152b arches from the main portion 21152a in a direction facing away from the electrode assembly 22, to form a second groove 21152c at a position corresponding to the arch portion 21152b on a side of the first bottom wall 21152 facing the electrode assembly 22, and the pressure relief groove 2111 is provided on the main portion 21152a.

The first bottom wall 21152 is a structure that partially arches in the direction facing away from the electrode assembly 22 in the thickness direction X of the wall portion to form the arch portion 21152b, and a region of the first bottom wall 21152 that does not arch and that connects the first side wall 21151 and the arch portion 21152b is the main portion 21152a, so that the main portion 21152a is an annular structure surrounding the peripheral side of the arch portion 21152b, and the first bottom wall 21152 is provided with the second groove 21152c at a position corresponding to the arch portion 21152b on the side facing the electrode assembly 22.

The pressure relief groove 2111 is provided on the main portion 21152a. In other words, the pressure relief groove 2111 is located between the arch portion 21152b and the first side wall 21151.

It should be noted that the first groove 2114, the first protrusion 2115, the pressure relief groove 2111, and the arch portion 21152b of the wall portion 211 are all structures formed by a stamping process, so that the wall portion 211 is provided with structures protruding toward two sides in the thickness direction X of the wall portion, so as to facilitate improvement of the material flow form during the stamping process of the pressure relief groove 2111 and reduce the stamping difficulty of the pressure relief groove 2111.

In these embodiments, a portion of the first bottom wall 21152 of the first protrusion 2115 is set as a structure arching in the direction facing away from the electrode assembly 22, so that the first bottom wall 21152 is provided with the arch portion 21152b and the main portion 21152a, where the main portion 21152a surrounds the peripheral side of the arch portion 21152b and connects the arch portion 21152b and the first side wall 21151. The provision of the pressure relief groove 2111 on the main portion 21152a, on the one hand, can reduce the difficulty of processing and forming the pressure relief groove 2111 on the first bottom wall 21152 and help to improve the material flow form during the process of forming the pressure relief groove 2111 on the first bottom wall 21152 so as to improve the processing quality of the pressure relief groove 2111, and on the other hand, can further enhance the structural strength of the first bottom wall 21152, which helps to alleviate the phenomena such as deformation of the region of the wall portion 211 where the pressure relief groove 2111 is provided during use, thereby improving the use reliability and stability of the battery cell 20.

In some embodiments, reference is still made to FIG. 6, the pressure relief groove 2111 surrounds the arch portion 21152b. In other words, the pressure relief groove 2111 is an annular groove structure, and the pressure relief groove 2111 surrounds the peripheral side of the arch portion 21152b. Certainly, the structure of the pressure relief groove 2111 is not limited thereto. In other embodiments, the pressure relief groove 2111 may alternatively be an arc-shaped groove structure or a strip-shaped groove structure.

In these embodiments, the pressure relief groove 2111 is set as an annular structure surrounding the arch portion 21152b, so that the overall region of the first bottom wall 21152 where the arch portion 21152b is formed can fall off after the overall wall portion 211 cracks along the pressure relief groove 2111 during pressure relief of the battery cell 20, which helps to expand a pressure relief area of the battery cell 20, and thus further increases a pressure relief rate of the battery cell 20, so as to reduce the risk such as explosion or bursting caused by untimely pressure relief of the battery cell 20, thereby effectively improving the use reliability of the battery cell 20.

In some embodiments, as shown in FIG. 5 and FIG. 6, along the thickness direction X of the wall portion, the pressure relief groove 2111 is provided on a side of the main portion 21152a facing away from the electrode assembly 22.

In these embodiments, the pressure relief groove 2111 is provided on the side of the main portion 21152a of the first bottom wall 21152 facing away from the electrode assembly 22, so that the pressure relief groove 2111 is formed on the bottom surface of the first groove 2114, which can reduce the difficulty of forming the pressure relief groove 2111 on the main portion 21152a of the first bottom wall 21152 and facilitate formation of the pressure relief groove 2111 during formation of the first groove 2114 and the arch portion 21152b, thereby further improving the processing efficiency of the battery cell 20.

In some embodiments, the pressure relief groove 2111 is formed on the main portion 21152a by stamping.

In these embodiments, the pressure relief groove 2111 is set as a structure formed on the main portion 21152a of the first bottom wall 21152 by stamping. This, on the one hand, can reduce the manufacturing difficulty of the pressure relief groove 2111 and help to improve the processing efficiency of the pressure relief groove 2111, and on the other hand, facilitates formation of a material flow during stamping formation of the pressure relief groove 2111 in the structure where the wall portion 211 is provided with the first groove 2114 and the first protrusion 2115 and the first bottom wall 21152 of the first protrusion 2115 is provided with the arch portion 21152b, which helps to improve the processing consistency of the pressure relief groove 2111, thereby improving the production quality of the battery cell 20.

According to some embodiments of this application, as shown in FIG. 4, FIG. 5, and FIG. 6, the battery cell 20 may further include an insulating member 24. The insulating member 24 is disposed on a side of the wall portion 211 facing the electrode assembly 22, and the insulating member 24 is configured to insulate and isolate the wall portion 211 from the electrode assembly 22. Along the thickness direction X of the wall portion, a side of the insulating member 24 facing the wall portion 211 is provided with an avoidance portion 241, and the avoidance portion 241 accommodates the first protrusion 2115.

The insulating member 24 plays a role in insulating and isolating the wall portion 211 from the electrode assembly 22. The insulating member 24 is disposed on the side of the wall portion 211 facing the electrode assembly 22. In other words, the insulating member 24 is located between the wall portion 211 and the electrode assembly 22 in the thickness direction X of the wall portion.

Exemplarily, the insulating member 24 may be made of various materials, such as rubber, silicone, or plastic.

The side of the insulating member 24 facing the wall portion 211 is provided with the avoidance portion 241, and the avoidance portion 241 accommodates the first protrusion 2115. In other words, the side of the insulating member 24 facing the wall portion 211 in the thickness direction X of the wall portion is provided with the avoidance portion 241 capable of avoiding the first protrusion 2115 of the wall portion 211, so that the first protrusion 2115 of the wall portion 211 can be accommodated in the avoidance portion 241 of the insulating member 24, meaning that the first protrusion 2115 of the wall portion 211 and the insulating member 24 are not in contact with each other.

Optionally, the avoidance portion 241 may be an avoidance groove provided on the side of the insulating member 24 facing the wall portion 211, may be an avoidance space formed on the side of the insulating member 24 facing the wall portion 211, or the like.

In these embodiments, by providing the avoidance portion 241 for accommodating the first protrusion 2115 on the side of the insulating member 24 facing the wall portion 211, the insulating member 24 can avoid the first protrusion 2115. This, on the one hand, can alleviate the interference phenomenon between the first protrusion 2115 and the insulating member 24 or other components, so as to improve the assembly quality of the battery cell 20. On the other hand, the first protrusion 2115 of the wall portion 211 provided with the pressure relief groove 2111 is accommodated in the avoidance portion 241 of the insulating member 24, so that the insulating member 24 can further provide certain protection for the region of the wall portion 211 where the pressure relief groove 2111 is provided, so as to reduce the phenomenon of abrasion or damage in the region of the wall portion 211 where the pressure relief groove 2111 is provided during assembly, thereby helping to improve the production quality of the battery cell 20.

According to some embodiments of this application, as shown in FIG. 5, the insulating member 24 may include a body portion 242 and an abutting portion 243. The body portion 242 is disposed between the wall portion 211 and the electrode assembly 22 along the thickness direction X of the wall portion. The abutting portion 243 is connected to a side of the body portion 242 facing the wall portion 211, and the abutting portion 243 abuts against the second surface 2113. Along the thickness direction X of the wall portion, a projection of the abutting portion 243 does not overlap with a projection of the first protrusion 2115, so that an interval space is formed between the body portion 242 and the second surface 2113, and the interval space is the avoidance portion 241.

The body portion 242 is disposed between the wall portion 211 and the electrode assembly 22 along the thickness direction X of the wall portion. In other words, the body portion 242 of the insulating member 24 is a portion of the insulating member 24 for insulation and isolation between the wall portion 211 and the electrode assembly 22.

The abutting portion 243 is connected to the side of the body portion 242 facing the wall portion 211, and the abutting portion 243 abuts against the second surface 2113. In other words, the abutting portion 243 is a structure supported between the body portion 242 and the wall portion 211 in the thickness direction X of the wall portion.

Along the thickness direction X of the wall portion, the projection of the abutting portion 243 does not overlap with the projection of the first protrusion 2115, so that an interval space is formed between the body portion 242 and the second surface 2113. In other words, the abutting portion 243 of the insulating member 24 does not cover the first protrusion 2115 in the thickness direction X of the wall portion, so that the body portion 242 of the insulating member 24 and the second surface 2113 of the wall portion 211 are structures spaced apart from each other and forming an interval space, and the interval space is the avoidance portion 241 of the insulating member 24 for avoiding the first protrusion 2115.

It should be noted that the structure of the insulating member 24 is not limited thereto. In other embodiments, the insulating member 24 may alternatively be another structure. For example, the insulating member 24 abuts against the second surface 2113 of the wall portion 211, and a surface of the insulating member 24 abutting against the second surface 2113 is provided with an avoidance groove for accommodating the first protrusion 2115, and the avoidance groove is the avoidance portion 241 of the insulating member 24.

Optionally, there may be one or a plurality of abutting portions 243 connected to the side of the body portion 242 facing the wall portion 211. Similarly, the abutting portion 243 may be connected to the body portion 242 through various structures, such as bonding, snap connection, or hot-melt connection.

Optionally, the body portion 242 may further be provided with a positioning hole. The positioning hole extends through the body portion 242 along the thickness direction X of the wall portion. The positioning hole plays a positioning role in a process of assembling the insulating member 24 into the housing 21, so as to reduce the difficulty of assembling the insulating member 24 into the housing 21 and improve the accuracy of assembling the insulating member 24 into the housing 21.

In these embodiments, the insulating member 24 is provided with the body portion 242 and the abutting portion 243 connected to the side of the body portion 242 facing the wall portion 211. The abutting portion 243 abuts against the second surface 2113 of the wall portion 211, and the projection of the abutting portion 243 in the thickness direction X of the wall portion does not overlap with the projection of the first protrusion 2115, so that the abutting portion 243 is a structure supported between the body portion 242 and the wall portion 211, and thus the body portion 242 of the insulating member 24 and the wall portion 211 are structures spaced apart in the thickness direction X of the wall portion. Thus, the interval space avoiding the first protrusion 2115 can be formed between the body portion 242 of the insulating member 24 and the second surface 2113 of the wall portion 211, so as to form the avoidance portion 241 for avoiding the first protrusion 2115, achieving a simple structure and facilitating assembly.

In some embodiments, as shown in FIG. 5, the insulating member 24 may include a plurality of abutting portions 243, the plurality of abutting portions 243 are all connected to the side of the body portion 242 facing the wall portion 211, and the plurality of abutting portions 243 are spaced apart.

Exemplarily, two abutting portions 243 are connected to the side of the body portion 242 facing the wall portion 211 in the thickness direction X of the wall portion. The two abutting portions 243 are spaced apart along a direction perpendicular to the thickness direction X of the wall portion, and the two abutting portions 243 are respectively located on two sides of the first protrusion 2115 in the direction perpendicular to the thickness direction X of the wall portion. Certainly, in other embodiments, the insulating member 24 may alternatively be provided with three, four, five, six, or seven abutting portions 243.

In these embodiments, a plurality of abutting portions 243 are connected to the side of the body portion 242 facing the wall portion 211, and the plurality of abutting portions 243 are spaced apart, so that the structural stability of the insulating member 24 assembled between the electrode assembly 22 and the wall portion 211 can be further improved, the effect of the plurality of abutting portions 243 in supporting the body portion 242 can be improved, and thus the overall structural strength of the insulating member 24 is enhanced. This reduces the phenomena such as deformation or collapse of the body portion 242 during use so as to alleviate the phenomenon of mutual interference between the body portion 242 and the first protrusion 2115 after deformation of the body portion 242, thereby helping to further improve the effect of the insulating member 24 in avoiding the first protrusion 2115.

In some embodiments, reference is still made to FIG. 5, along the thickness direction X of the wall portion, a minimum distance between the body portion 242 and the first protrusion 2115 is L, satisfying L≥0.1 mm.

Exemplarily, the minimum distance L between the body portion 242 and the first protrusion 2115 may be 0.1 mm, 0.12 mm, 0.13 mm, 0.15 mm, 0.18 mm, 0.2 mm, 0.25 mm, 0.3 mm, 0.35 mm, 0.4 mm, 0.5 mm, 0.6 mm, 0.7 mm, 0.8 mm, 0.9 mm, 1 mm, 1.1 mm, 1.2 mm, 1.3 mm, 1.5 mm, or the like.

In these embodiments, setting the minimum distance between the body portion 242 and the first protrusion 2115 in the thickness direction X of the wall portion to be greater than or equal to 0.1 mm helps to further improve the effect of the avoidance portion 241 of the insulating member 24 in avoiding the first protrusion 2115, so as to reduce the phenomenon that the body portion 242 of the insulating member 24 interferes with or causes abrasion to the first protrusion 2115, thereby further improving the assembly quality of the battery cell 20.

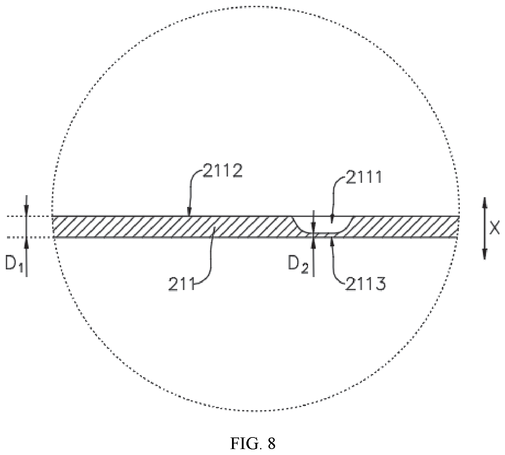

According to some embodiments of this application, reference is made to FIG. 7 and FIG. 8, where FIG. 7 is a cross-sectional view of a housing 21 of a battery cell 20 according to still some embodiments of this application, and FIG. 8 is a partial enlarged view of portion A of the housing 21 shown in FIG. 7. Along the thickness direction X of the wall portion, the wall portion 211 has a first surface 2112 and a second surface 2113 opposite each other, the pressure relief groove 2111 is provided on the first surface 2112, and the pressure relief groove 2111 is located between the first surface 2112 and the second surface 2113 in the thickness direction X of the wall portion.

The pressure relief groove 2111 is located between the first surface 2112 and the second surface 2113 in the thickness direction X of the wall portion. In other words, a region of the second surface 2113 corresponding to the pressure relief groove 2111 in the thickness direction X of the wall portion is coplanar with a region of the second surface 2113 not corresponding to the pressure relief groove 2111 in the thickness direction X of the wall portion.

In these embodiments, the pressure relief groove 2111 is provided on the first surface 2112, and the pressure relief groove 2111 is a structure located between the first surface 2112 and the second surface 2113 in the thickness direction X of the wall portion, so that no protrusion structure is formed in the region of the second surface 2113 corresponding to the pressure relief groove 2111, which helps to alleviate the interference phenomenon between the region of the wall portion 211 where the pressure relief groove 2111 is provided and other components, thereby improving the assembly quality of the battery cell 20.

In some embodiments, as shown in FIG. 8, the first surface 2112 is parallel to the second surface 2113.

In these embodiments, setting the first surface 2112 and the second surface 2113 as structures parallel to each other helps to further alleviate the interference phenomenon between the region of the wall portion 211 where the pressure relief groove 2111 is provided and other components, thereby further improving the assembly quality of the battery cell 20.

In some embodiments, as shown in FIG. 7 and FIG. 8, along the thickness direction X of the wall portion, the second surface 2113 faces the electrode assembly 22. In other words, the pressure relief groove 2111 is provided on a surface of a side of the wall portion 211 facing away from the electrode assembly 22.

In these embodiments, the second surface 2113 is set as a structure facing the electrode assembly 22, so that the pressure relief groove 2111 is a structure provided on a surface of the side of the wall portion 211 facing away from the electrode assembly 22, which facilitates the processing and formation of the pressure relief groove 2111 on the wall portion 211 and helps to reduce the difficulty of providing the pressure relief groove 2111 on the wall portion 211, thereby improving the production efficiency of the battery cell 20.

In some embodiments, the pressure relief groove 2111 is formed on the wall portion 211 by etching.

Exemplarily, in these embodiments, the pressure relief groove 2111 may be formed on the wall portion 211 through a processing process such as a laser etching process or a chemical etching process.

In these embodiments, the pressure relief groove 2111 is formed on the wall portion 211 by etching, so that the pressure relief groove 2111 is located between the first surface 2112 and the second surface 2113 of the wall portion 211 in the thickness direction X of the wall portion, and thus no protrusion structure is formed in the region of the second surface 2113 corresponding to the pressure relief groove 2111, which helps to reduce the processing difficulty of the pressure relief groove 2111 on the wall portion 211.

According to some embodiments of this application, as shown in FIG. 3 and FIG. 4, the pressure relief groove 2111 is an annular groove. In other words, the pressure relief groove 2111 is an annular structure with head connected to tail.

Exemplarily, in FIG. 3, the pressure relief groove 2111 is in an elliptical shape. Certainly, in other embodiments, the pressure relief groove 2111 may alternatively be in a circular shape or other shapes.

In these embodiments, the pressure relief groove 2111 is set as an annular groove structure, so that the overall region of the wall portion 211 located on an inner side of the pressure relief groove 2111 can fall off after the overall wall portion 211 cracks along the pressure relief groove 2111 during pressure relief of the battery cell 20, which helps to expand a pressure relief area of the battery cell 20, and thus further increases a pressure relief rate of the battery cell 20, so as to reduce the risk such as explosion or bursting caused by untimely pressure relief of the battery cell 20, thereby effectively improving the use reliability of the battery cell 20.

According to some embodiments of this application, as shown in FIG. 3 and FIG. 4, the housing 21 may include a shell 212 and two end covers 213. An accommodating cavity is formed inside the shell 212, the electrode assembly 22 is accommodated in the accommodating cavity, two opposite ends of the shell 212 are each provided with an opening 2121, and the two openings 2121 are both in communication with the accommodating cavity. The two end covers 213 respectively close the two openings 2121, and the shell 212 includes the wall portion 211.

The shell 212 includes the wall portion 211. In other words, the wall portion 211 is one of a plurality of walls of the shell 212. Correspondingly, the pressure relief groove 2111 is provided on a wall of the shell 212.

In these embodiments, two opposite ends of the shell 212 of the housing 21 are each provided with an opening 2121, and the two end covers 213 respectively close the two openings 2121. By setting the wall portion 211 of the housing 21 as a wall of the shell 212, the use of such structure in the battery cell 20 enables the region of the housing 21 provided with the pressure relief groove 2111 to be away from the end covers 213, which effectively alleviates the phenomenon that stress generated by the mutual connection between the end covers 213 and the shell 212 acts on the region of the wall portion 211 where the pressure relief groove 2111 is provided, so as to reduce the influence on the region of the wall portion 211 where the pressure relief groove 2111 is provided. This helps to reduce the risk of cracking or structural strength reduction of the region of the wall portion 211 where the pressure relief groove 2111 is provided under the pulling action of stress, thereby improving the service life and use reliability of the battery cell 20.

Certainly, the structure of the battery cell 20 is not limited thereto. In other embodiments, the battery cell 20 may alternatively be another structure. For example, the housing 21 may include a shell 212 and two end covers 213. An accommodating cavity is formed inside the shell 212, the electrode assembly 22 is accommodated in the accommodating cavity, two opposite ends of the shell 212 are each provided with an opening 2121, and the two openings 2121 are both in communication with the accommodating cavity. The two end covers 213 respectively close the two openings 2121, and one of the two end covers 213 is the wall portion 211.

In these embodiments, by setting the wall portion 211 as one of the two end covers 213, the use of such structure in the battery cell 20 facilitates assembly of the battery cell 20 from the two ends of the shell 212 respectively, which helps to reduce the manufacturing difficulty and assembly difficulty of the battery cell 20, facilitates the provision of the pressure relief groove 2111 on the end cover 213, and helps to reduce the manufacturing difficulty of the battery cell 20, thereby improving the production efficiency of the battery cell 20.

It should be noted that the battery cell 20 may alternatively be various structures. In some embodiments, the housing 21 may include a shell 212 and an end cover 213. An accommodating cavity having an opening 2121 is formed inside the shell 212, the electrode assembly 22 is accommodated in the accommodating cavity, the end cover 213 closes the opening 2121, and the shell 212 includes the wall portion 211. In other words, the shell 212 of the housing 21 is a hollow structure with an opening 2121 formed at only one end.

The shell 212 includes a second side wall and a second bottom wall that are integrally formed. In other words, the shell 212 is manufactured by using an integral forming process, for example, an integral forming process such as stamping, casting, or extrusion molding.

The shell 212 includes the wall portion 211. In other words, the wall portion 211 is a wall of the shell 212. The wall portion 211 may be the second bottom wall of the shell 212 disposed opposite the end cover 213 in the thickness direction X of the wall portion, or may be the second side wall of the shell 212.

In these embodiments, by setting the wall portion 211 of the housing 21 as a wall of the shell 212, the use of such structure in the battery cell 20 enables the region of the housing 21 provided with the pressure relief groove 2111 to be away from the end cover 213, which effectively alleviates the phenomenon that stress generated by the mutual connection between the end cover 213 and the shell 212 acts on the region of the wall portion 211 where the pressure relief groove 2111 is provided, so as to reduce the influence on the region of the wall portion 211 where the pressure relief groove 2111 is provided. This helps to reduce the risk of cracking or structural strength reduction of the region of the wall portion 211 where the pressure relief groove 2111 is provided under the pulling action of the stress, thereby improving the service life and use reliability of the battery cell 20.

Certainly, the structure of the battery cell 20 is not limited thereto. In the embodiments where the housing 21 may include a shell 212 and one end cover 213, the end cover 213 may alternatively be the wall portion 211. By setting the wall portion 211 of the housing 21 as the end cover 213 of the housing 21 for closing the opening 2121, the use of such structure in the battery cell 20 facilitates the provision of the pressure relief groove 2111 on the end cover 213, which helps to reduce the manufacturing difficulty of the battery cell 20, thereby improving the production efficiency of the battery cell 20.

According to some embodiments of this application, this application further provides a battery 100. The battery 100 includes the battery cell 20 of any of the above solutions.

As shown in FIG. 2, the battery 100 may further include a box 10, and the battery cell 20 is accommodated in the box 10.

In some embodiments, the box 10 may include a first box body 11 and a second box body 12. The first box body 11 and the second box body 12 cover each other, and the first box body 11 and the second box body 12 jointly define an assembly space for accommodating the battery cell 20.

Optionally, the second box body 12 may be a hollow structure open at one end, and the first box body 11 may be a plate-like structure. The first box body 11 covers an open side of the second box body 12, so that the first box body 11 and the second box body 12 jointly define the assembly space. The first box body 11 and the second box body 12 may alternatively each be a hollow structure open on one side, and the open side of the first box body 11 covers the open side of the second box body 12.

Certainly, the box 10 formed by the first box body 11 and the second box body 12 may have various shapes, such as a cylindrical shape or a rectangular shape. Exemplarily, in FIG. 2, the box 10 is a rectangular structure.

Optionally, there may be one or a plurality of battery cells 20 disposed in the box 10. Exemplarily, in FIG. 2, a plurality of battery cells 20 are disposed in the box 10 of the battery 100. The plurality of battery cells 20 may be connected in series, in parallel, or in series-parallel. Being connected in series-parallel means that there are both a series connection and a parallel connection between the plurality of battery cells 20. The plurality of battery cells 20 may be directly connected in series, in parallel, or in series-parallel, and then entirety formed by the plurality of battery cells 20 is accommodated in the box 10. Certainly, the battery 100 may alternatively be formed in a manner that a plurality of battery cells 20 are first connected in series, in parallel, or in series-parallel to form a battery module, and then a plurality of battery modules are connected in series, in parallel, or in series-parallel to form an entirety that is accommodated in the box 10.

The battery 100 may further include other structures. For example, the battery 100 may further include a busbar component, and the busbar component connects the plurality of battery cells 20 to realize electrical connection between the plurality of battery cells 20.

It should be noted that, in some embodiments, the battery 100 may not be provided with the box 10. The battery 100 includes a plurality of battery cells 20, and the battery 100 formed by the plurality of battery cells 20 can be directly assembled to an electric apparatus, so that electrical energy is provided for the electric apparatus through the plurality of battery cells 20. In other words, the box 10 may serve as a portion of the electric apparatus. In an example in which the electric apparatus is a vehicle 1000, the box 10 may serve as a portion of a chassis structure of the vehicle 1000. For example, a portion of the box 10 may become at least a portion of the floor of the vehicle 1000, or a portion of the box 10 may become at least a portion of cross beams and longitudinal beams of the vehicle 1000.

According to some embodiments of this application, this application further provides an electric apparatus. The electric apparatus includes the battery cell 20 of any of the above solutions, and the battery cell 20 is configured to provide electrical energy for the electric apparatus.

The electric apparatus may be any device or system applying the battery cell 20 mentioned above.

According to some embodiments of this application, as shown in FIG. 3 to FIG. 6, this application provides a battery cell 20. The battery cell 20 includes a housing 21, an electrode assembly 22, and an insulating member 24. The housing 21 has a wall portion 211. The housing 21 includes a shell 212 and two end covers 213. An accommodating cavity is formed inside the shell 212, two opposite ends of the shell 212 are each provided with an opening 2121, and the two openings 2121 are both in communication with the accommodating cavity. The two end covers 213 respectively close the two openings 2121, and the shell 212 includes the wall portion 211. The electrode assembly 22 is accommodated in the accommodating cavity. The housing 21 is made of steel, and the wall portion 211 is provided with a pressure relief groove 2111. The wall portion 211 is configured to be capable of cracking along at least a portion of the pressure relief groove 2111 when the battery cell 20 relieves pressure, so as to relieve the internal pressure of the battery cell 20. A wall thickness of the wall portion 211 is D₁, and a minimum residual thickness of the pressure relief groove 2111 is D₂, satisfying 0.075 mm≤D₁≤0.4 mm, and 0.08≤D₂/D₁≤0.3. Along a thickness direction X of the wall portion, the wall portion 211 has a first surface 2112 and a second surface 2113 opposite each other, the second surface 2113 faces the electrode assembly 22, and the first surface 2112 is provided with a first groove 2114. A first protrusion 2115 protruding from the second surface 2113 is formed at a position of the wall portion 211 corresponding to the first groove 2114. The first protrusion 2115 includes a first side wall 21151 and a first bottom wall 21152. The first side wall 21151 is disposed around the first bottom wall 21152, and the first side wall 21151 is connected to the first bottom wall 21152. The first side wall 21151 and the first bottom wall 21152 jointly define the first groove 2114. The first bottom wall 21152 includes a main portion 21152a and an arch portion 21152b. The main portion 21152a connects the arch portion 21152b and the first side wall 21151, and the main portion 21152a surrounds a peripheral side of the arch portion 21152b. Along the thickness direction X of the wall portion, the arch portion 21152b arches from the main portion 21152a in a direction facing away from the electrode assembly 22, to form a second groove 21152c at a position corresponding to the arch portion 21152b on a side of the first bottom wall 21152 facing the electrode assembly 22. The pressure relief groove 2111 is provided on a side of the main portion 21152a facing away from the electrode assembly 22, the pressure relief groove 2111 surrounds the arch portion 21152b, and the pressure relief groove 2111 is formed on the main portion 21152a by stamping. The insulating member 24 is disposed on a side of the wall portion 211 facing the electrode assembly 22, and the insulating member 24 is configured to insulate and isolate the wall portion 211 from the electrode assembly 22. Along the thickness direction X of the wall portion, a side of the insulating member 24 facing the wall portion 211 is provided with an avoidance portion 241, and the avoidance portion 241 accommodates the first protrusion 2115. The insulating member 24 includes a body portion 242 and two abutting portions 243. The body portion 242 is disposed between the wall portion 211 and the electrode assembly 22 along the thickness direction X of the wall portion. The two abutting portions 243 are both connected to a side of the body portion 242 facing the wall portion 211, and the abutting portions 243 abut against the second surface 2113. Along the thickness direction X of the wall portion, a projection of the abutting portion 243 does not overlap with a projection of the first protrusion 2115, so that an interval space is formed between the body portion 242 and the second surface 2113, and the interval space is the avoidance portion 241. A minimum distance between the body portion 242 and the first protrusion 2115 is L, satisfying L≥0.1 mm.

According to some embodiments of this application, as shown in FIG. 7 and FIG. 8, this application provides a battery cell 20. The battery cell 20 includes a housing 21, an electrode assembly 22, and an insulating member 24. The housing 21 has a wall portion 211. The housing 21 includes a shell 212 and two end covers 213. An accommodating cavity is formed inside the shell 212, two opposite ends of the shell 212 are each provided with an opening 2121, and the two openings 2121 are both in communication with the accommodating cavity. The two end covers 213 respectively close the two openings 2121, and the shell 212 includes the wall portion 211. The electrode assembly 22 is accommodated in the accommodating cavity. The housing 21 is made of steel, and the wall portion 211 is provided with a pressure relief groove 2111. The pressure relief groove 2111 is formed on the wall portion 211 by etching, and the wall portion 211 is configured to be capable of cracking along at least a portion of the pressure relief groove 2111 when the battery cell 20 relieves pressure, so as to relieve an internal pressure of the battery cell 20. The pressure relief groove 2111 is an annular groove. A wall thickness of the wall portion 211 is D₁, and a minimum residual thickness of the pressure relief groove 2111 is D₂, satisfying 0.075 mm≤D₁≤0.4 mm, and 0.08≤D₂/D₁≤0.3. Along a thickness direction X of the wall portion, the wall portion 211 has a first surface 2112 and a second surface 2113 opposite each other, the second surface 2113 faces the electrode assembly 22, the pressure relief groove 2111 is provided on the first surface 2112, the pressure relief groove 2111 is located between the first surface 2112 and the second surface 2113 in the thickness direction X of the wall portion, and the first surface 2112 is parallel to the second surface 2113.

It should be noted that, without conflict, the embodiments and features in the embodiments of this application can be combined with each other.

The above descriptions are only preferred embodiments of this application and are not intended to limit this application. For those skilled in the art, this application may have various modifications and changes. Any modification, equivalent replacement, improvement, and the like made within the spirit and principle of this application shall be included in the protection scope of this application.

## Claims

1. A battery cell, comprising:
a housing, having a wall portion; and
an electrode assembly accommodated in the housing,
wherein the housing is made of steel, the wall portion is provided with a pressure relief groove, and the wall portion is configured to be capable of cracking along at least a portion of the pressure relief groove when the battery cell relieves pressure, so as to relieve an internal pressure of the battery cell.

2. The battery cell according to claim 1, wherein a wall thickness of the wall portion is D₁, satisfying 0.075 mm≤D₁≤0.4 mm.

3. The battery cell according to claim 2, wherein 0.075 mm≤D₁≤0.25 mm.

4. The battery cell according to any one of claims 1 to 3, wherein along a thickness direction of the wall portion, a minimum residual thickness of the pressure relief groove is D₂, and the wall thickness of the wall portion is D₁, satisfying 0.08≤D₂/D₁≤0.3.

5. The battery cell according to any one of claims 1 to 4, wherein along a thickness direction of the wall portion, the wall portion has a first surface and a second surface opposite each other, the second surface faces the electrode assembly, the first surface is provided with a first groove, a first protrusion protruding from the second surface is formed at a position of the wall portion corresponding to the first groove, and the pressure relief groove is provided on the first protrusion.

6. The battery cell according to claim 5, wherein the first protrusion comprises a first side wall and a first bottom wall, the first side wall is disposed around the first bottom wall, the first side wall is connected to the first bottom wall, the first side wall and the first bottom wall jointly define the first groove, and the pressure relief groove is provided on the first bottom wall.

7. The battery cell according to claim 6, wherein:
the first bottom wall comprises a main portion and an arch portion, the main portion connects the arch portion and the first side wall, and the main portion surrounds a peripheral side of the arch portion; and
along the thickness direction of the wall portion, the arch portion arches from the main portion in a direction facing away from the electrode assembly, to form a second groove at a position corresponding to the arch portion on a side of the first bottom wall facing the electrode assembly, and the pressure relief groove is provided on the main portion.

8. The battery cell according to claim 7, wherein the pressure relief groove surrounds the arch portion.

9. The battery cell according to claim 7 or 8, wherein along the thickness direction of the wall portion, the pressure relief groove is provided on a side of the main portion facing away from the electrode assembly.

10. The battery cell according to any one of claims 7 to 9, wherein the pressure relief groove is formed on the main portion by stamping.

11. The battery cell according to any one of claims 5 to 10, wherein the battery cell further comprises:
an insulating member, disposed on a side of the wall portion facing the electrode assembly, wherein:
the insulating member is configured to insulate and isolate the wall portion from the electrode assembly; and
along the thickness direction of the wall portion, a side of the insulating member facing the wall portion is provided with an avoidance portion, and the avoidance portion accommodates the first protrusion.

12. The battery cell according to claim 11, wherein the insulating member comprises:
a body portion, disposed between the wall portion and the electrode assembly along the thickness direction of the wall portion; and
an abutting portion, connected to a side of the body portion facing the wall portion, wherein:
the abutting portion abuts against the second surface; and
along the thickness direction of the wall portion, a projection of the abutting portion does not overlap with a projection of the first protrusion, so that an interval space is formed between the body portion and the second surface, and the interval space is the avoidance portion.

13. The battery cell according to claim 12, wherein the insulating member comprises a plurality of abutting portions, the plurality of abutting portions are all connected to the side of the body portion facing the wall portion, and the plurality of abutting portions are spaced apart.

14. The battery cell according to claim 12 or 13, wherein along the thickness direction of the wall portion, a minimum distance between the body portion and the first protrusion is L, satisfying L≥0.1 mm.

15. The battery cell according to any one of claims 1 to 4, wherein:
along a thickness direction of the wall portion, the wall portion has a first surface and a second surface opposite each other; and
the pressure relief groove is provided on the first surface, and the pressure relief groove is located between the first surface and the second surface in the thickness direction of the wall portion.

16. The battery cell according to claim 15, wherein the first surface is parallel to the second surface.

17. The battery cell according to claim 15 or 16, wherein along the thickness direction of the wall portion, the second surface faces the electrode assembly.

18. The battery cell according to any one of claims 15 to 17, wherein the pressure relief groove is formed on the wall portion by etching.

19. The battery cell according to any one of claims 1 to 18, wherein the pressure relief groove is an annular groove.

20. The battery cell according to any one of claims 1 to 19, wherein the housing comprises:
a shell, inside which an accommodating cavity is formed, wherein the electrode assembly is accommodated in the accommodating cavity, two opposite ends of the shell are each provided with an opening, and the two openings are both in communication with the accommodating cavity; and
two end covers, respectively closing the two openings,
wherein the shell comprises the wall portion, or one of the two end covers is the wall portion.

21. The battery cell according to any one of claims 1 to 19, wherein the housing comprises:
a shell, inside which an accommodating cavity having an opening is formed, wherein the electrode assembly is accommodated in the accommodating cavity; and
an end cover, closing the opening,
wherein the shell comprises the wall portion, or the end cover is the wall portion.

22. A battery, comprising the battery cell according to any one of claims 1 to 21.

23. An electric apparatus, comprising the battery cell according to any one of claims 1 to 21, wherein the battery cell is configured to provide electrical energy.
